# FASCICULE DE BREVET EUROPEEN

(11) **EP 3 877 174 B1**
(45) Date de publication et mention de la délivrance du brevet: **27.11.2024**
(21) Numéro de dépôt: 19813107.0
(22) Date de dépôt: 24.10.2019
(51) Int. Cl.: B32B 7/06, B32B 7/12, B32B 25/04, B32B 25/08, B32B 25/12, B32B 25/14, B32B 25/16, B32B 27/08, B32B 27/32, B32B 27/34, B32B 27/36, B32B 27/30

(54) **NOUVEAU FILM MULTICOUCHE POUR EMBALLAGE REFERMABLE A REFERMETURE AMELIOREE**
NEUE MEHRSCHICHTFOLIE FÜR WIEDERVERSCHLIESSBARE VERPACKUNGEN MIT VERBESSERTER WIEDERVERSCHLIESSBARKEIT
NEW MULTILAYER FILM FOR RECLOSABLE PACKAGING WITH IMPROVED RECLOSABILITY

(30) Priorité: 08.11.2018 FR 1871410
(43) Date de publication de la demande: 15.09.2021
(73) Titulaire: Bostik SA, 92700 Colombes (FR)
(72) Inventeur: PUCHOIS, Romain, 60280 VENETTE (FR); ROBERT, Christophe, 60280 VENETTE (FR)
(74) Mandataire: Arkema Patent
(86) Numéro de dépôt international: PCT/FR2019/052539
(87) Numéro de publication internationale: WO 2020/094945

(56) Documents cités:
- EP-A1- 2 946 920
- US-A1- 2008 032 148
- US-A1- 2013 052 471

## Description

La présente invention a pour objet un film multicouche comprenant une couche constituée par une composition auto-adhésive thermofusible extrudable, un procédé de fabrication dudit film, ainsi que son utilisation pour la fabrication d'emballages (ou barquettes) refermables, destinés en particulier au conditionnement de denrées alimentaires, notamment périssables.

On connaît par les demandes WO 02/064694, WO 12/045950, WO 12/045951 et WO 14/020243 des compositions auto-adhésives thermofusibles extrudables destinées à une utilisation pour la fabrication d'emballages (ou barquettes) refermables.

Les emballages refermables, par exemple sous forme de barquettes ou sachets, sont utilisés dans l'industrie agroalimentaire et la grande distribution pour conditionner des denrées périssables, notamment des produits frais. De tels emballages sont également décrits par le brevet EP 1053952.

US2013052471A1 concerne une composition adhésive de couche de liaison pour structures multicouches comprenant de 1 à 30 % en poids d'une composition de polyoléfine greffée, de 65 à 85 % en poids de polyéthylène, de 0,5 à 25 % en poids de polyéthylène ayant une ramification à longue chaîne et éventuellement un ou plusieurs additifs. La composition de greffage peut être choisie parmi un mélange d'une polyoléfine greffée et d'un élastomère oléfinique, et le produit de réaction d'une polyoléfine greffée réactive et d'un élastomère oléfinique. Ce document ne concerne pas un emballage refermable.

US2008032148A1 concerne des mélanges d'adhésifs convenant à une utilisation en tant qu'adhésifs de couche de liaison pour une variété de substrats utilisés dans des constructions de films et de feuilles multicouches. Les mélanges adhésifs contiennent une résine à base de polyoléfine, une polyoléfine fonctionnalisée et un élastomère de propylène contenant du propylène isotactique. Ce document ne concerne pas un emballage refermable.

Après une première ouverture de l'emballage, et consommation d'une partie du produit alimentaire qu'il contient, le consommateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris soit dans la feuille composite qui constitue le réceptacle soit, de manière préférée, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Les compositions auto-adhésives extrudables décrites dans les demandes précitées sont des compositions thermofusibles comprenant une résine tackifiante et un copolymère bloc styrénique incluant un bloc élastomère. Les compositions auto-adhésives thermofusibles sont également dénommée couramment HMPSA, correspondant aux initiales de la traduction anglaise « Hot Melt Pressure Sensitive Adhesive ». Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

Par ailleurs, ces compositions auto-adhésives thermofusibles (ou HMPSA), qui sont préparées par mélange à chaud de leurs ingrédients, présentent en plus l'avantage de pouvoir être mises sous la forme de granulés (de taille comprise entre 1 et 10 mm) au moyen d'une étape d'extrusion réalisée directement à chaud après l'étape de mélange, par exemple au moyen d'une extrudeuse à 2 vis munie d'un outil de découpe du produit extrudé.

Grâce aux granulés ainsi obtenus, le film tricouche qui est constitué de la couche de composition auto-adhésive thermofusible et des 2 couches minces de matériau polymérique thermoplastique à assembler, peut être commodément fabriqué par co-extrusion, en alimentant par exemple un dispositif de soufflage de bulle par les matériaux constitutifs des 3 couches sous la forme de granulés de taille définie précédemment.

La facilité d'ouverture de tels emballages est étroitement liée aux propriétés du PSA et plus particulièrement à la force qu'il faut appliquer, lors de l'ouverture de l'emballage (ci-après dénommée première ouverture), pour obtenir la rupture de la couche adhésive mère et/ou sa séparation d'une des 2 couches qui lui sont adjacentes dans le film composite multicouche mentionné précédemment.

La capacité de l'emballage à se refermer et la qualité de la refermeture obtenue (ci-après dénommée première refermeture) sont également importantes pour disposer à nouveau d'un emballage substantiellement hermétique et donc apte à assurer la conservation de son contenu. La qualité de la première refermeture est également étroitement liée aux propriétés du PSA. Elle est évaluée par la force qu'il faut appliquer, lors de la ré-ouverture (désignée ci-après par deuxième ouverture), pour obtenir à nouveau la rupture et/ou le décollement de la couche adhésive qui a été formée par le repositionnement des 2 couches adhésives filles, suivi par la pression manuelle appliquée sur le pourtour de l'emballage.

La demande de brevet EP 1053952 enseigne un emballage refermable avec un contenant qui comprend une couche complexable, une couche d'adhésif et une couche soudante déchirable. Cet adhésif est un auto-adhésif qui est décrit de manière très générale.

La demande US2013/0029553 décrit un film multicouche pour emballages refermables comprenant une couche thermosoudable constituée d'un PolyEthylèneTéréphtalate amorphe spécifique, une couche de PSA, et au moins une couche de liaison constituée d'un copolymère d'éthylène et d'acrylate de méthyle.

La demande WO 12/045951 divulgue un film multicouche comprenant 2 couches minces de matériaux thermoplastiques liées entre elles par une couche d'une composition adhésive à base de copolymères blocs styréniques, ladite couche ayant une épaisseur comprise entre 7 et 300 µm. Ce film multicouche, qui convient à la fabrication d'emballages refermables, permet de rendre l'ouverture de ces derniers plus facile, en abaissant la force de première ouverture, tout en maintenant substantiellement au même niveau la qualité de la refermeture subséquente (ou première refermeture).

La demande EP2946920 décrit un film multicouche qui comprend, outre les 2 couches minces D et E d'un matériau thermoplastique et la couche de composition auto-adhésive thermofusible A qui les solidarise, 2 couches de liaison B et C qui s'intercalent entre d'une part la couche A et d'autre part, respectivement, les couches D et E, conférant au film multicouche qui en résulte une structure D/B/A/C/E. Lesdites couches B et C sont constituées par une composition à base d'un polyéthylène (PE) ou polypropylène (PP) modifiés par un anhydride cyclique d'un acide insaturé, tel que l'anhydride maléïque, et notamment un PE greffé par l'anhydride maléïque.

Un tel film multicouche permet, avantageusement, d'améliorer les performances de refermeture des emballages correspondants, tout en maintenant une première ouverture facile. L'augmentation des performances de refermeture et notamment la qualité de la première refermeture, assure ainsi au consommateur qui a procédé à la 1^{ère} ouverture de l'emballage refermable pour en consommer une partie du contenu, une conservation plus efficace de la portion restante du produit alimentaire périssable.

Un but de l'invention est de proposer de nouvelles couches de liaison, résultant en un système multicouche convenant à la fabrication d'emballage refermable, qui permettent - tout en maintenant une première ouverture facile de l'emballage - d'améliorer la qualité de sa refermeture (ou première refermeture), de manière à assurer au consommateur de manière plus efficace la conservation de la portion restante du produit alimentaire périssable.

L'invention a également pour but d'augmenter la force de deuxième ouverture, tout en maintenant la force de première ouverture à un niveau acceptable.

Un autre but de la présente invention est de proposer un film multicouche permettant de réaliser les buts précédents à la température ambiante, correspondant à la température à laquelle le consommateur procède à l'ouverture et à la refermeture de l'emballage.

Un autre but de la présente invention est de proposer un film multicouche susceptible d'être fabriqué par co-extrusion à partir de matières premières conditionnées sous la forme de granulés, notamment par co-extrusion par soufflage de bulle, en vue de la fabrication d'un emballage refermable.

Il a à présent été trouvé que ces buts peuvent être obtenus, en totalité ou en partie, au moyen du film multicouche selon l'invention qui est décrit ci-après.

La présente invention est telle que décrite dans les revendications 1 à 14.

La présente invention a donc pour objet en premier lieu un film multicouche comprenant 2 couches minces D et E d'un matériau thermoplastique liées entre elles par une couche continue A qui a une épaisseur allant de 7 à 50 µm, et est constituée par une composition auto-adhésive thermofusible (a) comprenant, sur la base du poids total de ladite composition :
- de 40 à 70 % en poids d'une composition (a1) de copolymères blocs styréniques comprenant au moins un bloc élastomère, ladite composition (a1) étant constituée, sur la base de son poids total :
   - de 30 à 90 % en poids d'au moins un copolymère dibloc choisi dans le groupe comprenant les SI, SBI, SIB, SB, SEB, et SEP, et
   - de 10 à 70 % en poids d'au moins un copolymère tribloc choisi dans le groupe comprenant les SIS, SIBS, SBS, SEBS et SEPS ;
      la teneur en motifs styréniques totale de ladite composition (a1) variant de 10 à 40 % en poids sur la base du poids total de (a1) ; et
- de 30 à 60 % en poids d'une ou plusieurs résines tackifiantes (a2) ;

ledit film multicouche étant en outre caractérisé en ce que la couche adhésive A est :
   - reliée à la couche D par l'intermédiaire d'une couche de liaison B, et
   - reliée à la couche E par l'intermédiaire d'une couche de liaison C ;
chacune des 2 couches B et C étant constituée respectivement par une composition (b) et (c) comprenant chacune :
   - de 50 à 98 % en poids d'une polyoléfine (P) choisie parmi un polyéthylène (PE) et un polypropylène (PP), éventuellement modifiés par l'anhydride maléïque ; et
   - de 2 à 50 % en poids d'au moins un composé élastomère (EL) choisi parmi un copolymère d'éthylène et de propylène (ci-après EL1) et un copolymère bloc styrénique (ci-après EL 2) comprenant au moins un bloc élastomère ;
sur la base du poids total de ladite composition.

Outre les pourcentages indiqués ci-dessus, tous les pourcentages utilisés de façon générale dans le présent texte pour désigner les quantités d'ingrédients d'une composition correspondent, en l'absence d'indication contraire, à des pourcentages exprimés en poids sur la base du poids total de ladite composition.

Il est à présent décrit ci-après plus en détail les caractéristiques des couches A, B, C, D et E comprises dans le film multicouche selon l'invention.

L'unité non-SI dalton (Da) correspond à g/mol.

### Description de la composition (a) constitutive de la couche adhésive A :

### Composition (a1) de copolymères blocs styréniques comprenant au moins un bloc élastomère :

La composition (a1) de copolymères blocs styréniques comprenant au moins un bloc élastomère, qui est comprise dans la composition HMPSA (a) constitutive de la couche adhésive A est elle-même constituée, sur la base de son poids total :
- de 30 à 90 % en poids d'au moins un copolymère dibloc choisi dans le groupe comprenant les SI, SBI, SIB, SB, SEB, et SEP, et
- de 10 à 70 % en poids d'au moins un copolymère tribloc choisi dans le groupe comprenant les SIS, SIBS, SBS, SEBS et SEPS.

Les copolymères blocs styréniques mis en œuvre ont une masse molaire moyenne en poids Mw généralement comprise entre 50 kDa et 500 kDa.

Ces copolymères blocs styréniques sont constitués de blocs de différents monomères polymérisés incluant au moins un bloc polystyrène, et sont préparés par des techniques de polymérisation radicalaire.

En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères tri-bloc ont pour formule générale :

ABA (I)

dans laquelle :
- A représente un bloc non élastomère styrénique (ou polystyrène), et
- B représente un bloc élastomère qui peut être :
   - le polyisoprène. Le copolymère bloc a alors pour structure : polystyrène-polyisoprène-polystyrène, et pour dénomination : SIS ;
- le polyisoprène suivi d'un bloc polybutadiène. Le copolymère bloc a alors pour structure : polystyrène-polyisoprène-polybutadiène-polystyrène, et pour dénomination : SIBS
- le polybutadiène. Le copolymère bloc a alors pour structure : polystyrène- polybutadiène- polystyrène, et pour dénomination : SBS ;
- le polybutadiène hydrogéné totalement ou en partie. Le copolymère bloc a alors pour structure: polystyrène-poly(éthylènebutylène)- polystyrène et pour dénomination : SEBS ;
- le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque la composition (a1) comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis,* pour les copolymères diblocs.

On préfère utiliser une composition (a1) comprenant un copolymère tribloc et un copolymère dibloc ayant le même bloc élastomère, en raison notamment du fait que de tels mélanges sont disponibles commercialement.

Selon une variante de réalisation particulièrement préférée, la teneur en copolymère dibloc dans la composition (a1) peut varier de 40 à 90 %, de préférence de 50 à 90 %, encore plus préférentiellement de 50 à 60 %.

Selon un mode de réalisation particulièrement avantageux de la composition (a) constitutive de la couche A comprise dans le film multicouche selon l'invention, la composition (a1) est constituée d'un copolymère tribloc SIS et d'un copolymère dibloc SI. Dans ce cas la teneur en motifs styréniques totale de la composition (a1) varie de préférence de 10 à 20 %.

Les copolymères triblocs compris dans la composition (a1) ont de préférence une structure linéaire.

Les copolymères blocs styréniques à bloc élastomère, notamment de type SI et SIS, utilisables dans la composition (a) sont disponibles commercialement, souvent sous la forme de mélanges tribloc/dibloc.

Le Kraton^{®} D1113BT de la société Kraton et le Quintac^{®} 3520 de la société Zeon Chemicals sont des exemples de compositions a1 constituées de SIS et SI.

Le Kraton^{®} D1113BT est une composition dont la teneur en motifs styréniques globale est de 16 %, et qui est constituée de 45 % de copolymère tribloc SIS linéaire de M_{w} environ 250 kDa, et de 55 % de copolymère dibloc SI de M_{w} environ 100 kDa. Le Quintac^{®} 3520 est une composition qui est constituée, respectivement, de 22 % et de 78 % de tribloc SIS linéaire (M_{w} environ 300 kDa) et de dibloc SI (M_{w} environ 130 kDa), et dont la teneur totale en motifs styréniques est de 15 %.

### Résines tackifiantes (a2) :

La composition HMPSA (a) constitutive de la couche A comprend également une ou plusieurs résines tackifiantes (a2).

La ou les résines tackifiantes (a2) utilisables ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

Selon une variante préférée, la température (ou point) de ramollissement des résines tackifiantes utilisables dans la composition selon l'invention peut varier de 5 à 140 °C. La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Selon une variante préférée, on utilise des résines aliphatiques appartenant aux catégories (ii) ou (iii) pour lesquelles on peut citer comme exemples de résine disponible commercialement :
(ii) l'Escorez^{®} 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et une masse molaire moyenne en poids Mw d'environ 1800 Da ; l' Escorez^{®} 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ;
(iii) la Dercolyte^{®} S115 disponible auprès de la société « Dérivés Résiniques et Terpéniques ou DRT) qui une résine terpène ayant une température de ramollissement de 115°C et un Mw d'environ 2300 Da.

Selon une variante préférée, la composition HMPSA (a) constitutive de la couche A est constituée essentiellement :
- de 40 à 70 % de la composition (a1) de copolymères blocs styréniques ; et
- de 30 à 60 % d'au moins une résine tackifiante (a2) ayant une température de ramollissement comprise entre 5 et 140 °C.

Selon une autre variante préférée, la composition HMPSA (a) constitutive de la couche A comprend ou est constituée essentiellement :
- de 50 à 70 % de la composition (a1) de copolymères blocs styréniques ; et
- de 30 à 50 % d'au moins une résine tackifiante (a2) ayant une température de ramollissement comprise entre 5 et 140 °C.

Selon encore une autre variante préférée, la composition HMPSA (a) constitutive de la couche A peut également comprendre, outre la composition (a1) et la (ou les) résines tackifiantes (a2), de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition (a) peut également comprendre un plastifiant, mais dans une quantité ne dépassant pas 5 %. On peut utiliser comme plastifiant une huile paraffinique et naphténique (comme le Primol^{®} 352 de la société ESSO) comprenant éventuellement des composés aromatiques (comme le Nyflex 222B).

La composition (a) peut enfin comprendre des charges minérales ou organiques, des pigments ou des colorants.

L'indice d'écoulement (ou Melt Flow Index MFI) de la composition auto-adhésive thermofusible (a) de la couche A est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles de la couche A ayant un MFI allant de 2 à 100 g/10 minutes sont plus particulièrement préférées.

### Description des compositions (b) et (c) constitutives, respectivement, des couches de liaison B et C :

Les couches de liaison B et C sont également désignées par l'appellation de « couches intermédaires » ou par le terme anglais de « tie layers ».

Ces 2 couches sont respectivement constituées de compositions (b) et (c), identiques ou différentes, chacune comprenant:
- une polyoléfine (P) choisie parmi un polyéthylène (PE) et un polypropylène (PP), éventuellement modifiés par l'anhydride maléïque ; et
- au moins un composé élastomère (EL) choisi parmi un copolymère d'éthylène et de propylène (ci-après EL1) et un copolymère bloc styrénique (ci-après EL2) comprenant au moins un bloc élastomère.

Chacune des compositions (b) et (c) comprend et, selon une variante préférée est constituée essentiellement par, :
- de 50 à 98 % en poids de la polyoléfine (P) ; et
- de 2 à 50 % en poids du composé élastomère (EL) ;
sur la base du poids total de ladite composition.

Un domaine plus particulièrement préféré est :
- de 55 à 97 % en poids de la polyoléfine (P) ; et
- de 3 à 45 % en poids du composé élastomère (EL).

### Polyolféine (P) :

La polyoléfine (P) est choisie parmi un polyéthylène (PE) et un polypropylène (PP), éventuellement modifiés par l'anhydride maléïque.

Le (PE) est un homopolymère (ou un copolymère) de polyéthylène qui peut inclure un polyéthylène linéaire tel que le HDPE (High Density PolyEthylene), un polyéthylène linéaire de basse densité (LLDPE), très basse ou ultrabasse densité (VLDPE ou ULDPE), un polyéthylène ramifié tel que le polyéthylène basse densité (ou LDPE). De tels polyéthylènes peuvent être préparés par plusieurs méthodes, incluant la polymérisation en présence d'un catalyseur de Ziegler-Natta, la polymérisation catalysée par un métallocène, la polymérisation radicalaire.

Le (PE) ou le (PP) compris dans les compositions (b) et (c) des couches de liaison (B) et (C) peuvent éventuellement être modifiés par l'anhydride maléïque.

On peut citer comme anhydride carboxylique insaturé cyclique comprenant 4 ou 5 atomes de carbone les composés suivants :
- l'anhydride maléique de formule : 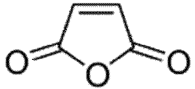
- l'anhydride itaconique de formule : 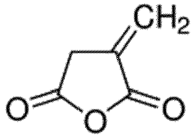
- l'anhydride citraconique de formule :

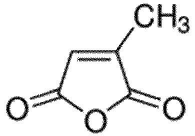

On peut citer comme anhydride carboxylique insaturé linéaire comprenant 6 ou 8 atomes de carbone les composés suivants :
- l'anhydride crotonique de formule : 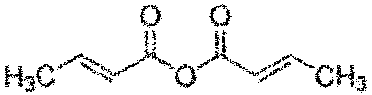
- l'anhydride acrylique de formule :

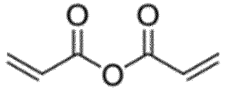

L'anhydride maléïque est mis en œuvre dans l'invention.

La polyoléfine (P) est de préférence un (PE), qui peut éventuellement être modifié par l'anhydride maléïque.

On entend désigner par « polyéthylène modifié » par ledit anhydride soit un copolymère d'éthylène et dudit anhydride, soit un homopolymère ou copolymère d'éthylène greffé par ledit anhydride.

Les copolymères d'éthylène et d'anhydride sont par exemple des copolymères statistiques comprenant :
- un motif de répétition dérivé de l'éthylène,
- un motif de répétition dérivé de l'anhydride, et éventuellement
- un motif de répétition dérivé d'une alpha-oléfine pouvant avoir de 3 à 20 atomes de carbone. Les alpha-oléfines mises en œuvre peuvent être le propylène, le 1-butène, le 1-hexène, le 4-méthyl-1-pentène, le 1-octène, le 1-décène, le 1-tétradécène et le 1-octadécène.

Les copolymères d'éthylène et d'anhydride peuvent comprendre de 0,3 à 20 % en poids de l'anhydride défini précédemment, et - lorsque le comonomère correspondant est présent - de 20 à 30 % en poids d'alpha-oléfine. Le motif de répétition dérivé de l'éthylène peut représenter d'environ 20, 40 ou 50 % à environ 70, 80, 90 ou 95 % en poids du copolymère.

Les homopolymères (ou copolymères) d'éthylène greffés sont préparés en faisant réagir un (co)polymère d'éthylène déjà formé avec le composé à greffer par chauffage, avec ou sans un catalyseur générateur de radicaux libres (tel qu'un peroxyde organique) et en présence ou non d'un solvant.

Aucun des atomes constitutifs du radical greffé, souvent ajouté par une réaction radicalaire, n'est incorporé dans la chaîne principale du (co)polymère d'éthylène. Le radical greffé est relié, en tant que groupe pendant, à certains motifs de répétition de la chaîne principale du (co)polymère.

Le polymère d'éthylène qui est greffé par l'anhydride est soit un homopolymère soit un copolymère. Un tel copolymère est par exemple un copolymère statistique comprenant outre le motif de répétition dérivé de l'éthylène un motif de répétition dérivé d'une alpha-oléfine telle que définie précédemment.

Selon une première variante de réalisation, la polyoléfine (P) comprise dans au moins une des compositions (b) et (c) est un (PE), de préférence un (LDPE).

Selon une deuxième variante de réalisation, la polyoléfine (P) comprise dans au moins une des compositions (b) et (c) est un (PE) greffé par l'anhydride maléïque, de préférence un (LLDPE) greffé par l'anhydride maléïque.

Beaucoup de polyéthylènes modifiés par l'anhydride maléïque sont disponibles commercialement.

On peut citer ainsi le Bynel^{®} 4206 commercialisé par DuPont qui est un LLDPE modifié par l'anhydride maléïque, ou encore l'Orevac^{®} 18360 commercialisé par Arkema et le Bynel^{®} 41E865 de DuPont qui sont tous deux des LLDPE greffés par l'anhydride maléïque.

Selon une variante préférée, le polyéthylène modifié compris dans les compositions (b) et( c) est un homopolymère ou copolymère d'éthylène greffé.

### Composé élastomère (EL) :

Le composé élastomère (EL) est choisi parmi un copolymère d'éthylène et de propylène (EL1) et un copolymère bloc styrénique (EL2) comprenant au moins un bloc élastomère.

Selon un 1^{er} mode de réalisation, le composé élastomère (EL) est un copolymère d'éthylène et de propylène (EL1).

Les copolymères d'éthylène et de propylène (également dénommés "Ethylene-Propylene Rubber" en anglais) forment une classe de caoutchoucs synthétiques utilisés dans les domaines des moteurs pour automobile, du cablage électrique et de la construction. Ils sont préparés par polymérisation d'éthylène et de propylène en solution dans un solvant organique (tel que l'hexane) en présence d'un catalyseur de Ziegler-Natta. La teneur en poids d'éthylène est habituellement comprise de 40 à 65 % en poids, sur la base du poids total de monomères mis en œuvre. Les copolymères d'éthylène et de propylène sont également largement disponibles commercialement.

Selon une variante avantageuse de ce 1^{er} mode de réalisation, au moins une des compositions (b) et (c) constitutives des couches de liaison B et C, comprend, et de préférence est constituée essentiellement par :
- de 50 à 85 % en poids de (PE) greffé par l'anhydride maléïque, de préférence de 50 à 70 % ; et
- de 15 à 50 % en poids de (EL1), de préférence de 30 à 50 %, encore plus préférentiellement de 35 à 45 %.

Le (LLDPE) greffé par l'anhydride maléïque est tout particulièrement préféré comme (PE) dans le cas de cette variante.

Un tel mélange est également disponible au plan commercial. On peut ainsi citer le produit ADMER^{™} AT1955E disponible auprès de MITSUI CHEMICALS, qui est une composition constituée essentiellement d'environ 55-60 % en poids de LLDPE greffé anhydride maléïque et de 40-45 % en poids de Ethylene-Propylene Rubber.

Selon un 2^{nd} mode de réalisation, le composé élastomère (EL) est un copolymère bloc styrénique (EL2) comprenant au moins un bloc élastomère.

Ledit copolymère bloc styrénique est tel que défini ci-dessus pour la composition HMPSA (a) constitutive de la couche adhésive A, et se présente, selon une variante préférée de l'invention, sous la forme d'une composition de dibloc et de tribloc qui est elle-même telle que définie précédemment pour la composition (a1), et qui peut être identique ou différente à (a1).

Selon une variante avantageuse de ce 2^{nd} mode de réalisation, au moins une des compositions (b) et (c) constitutives des couches de liaison B et C, comprend, et de préférence est constituée essentiellement par :
- de 70 à 98 % en poids de (PE), de préférence de 80 à 97 % ; et
- de 2 à 30 % en poids de (EL2), de préférence de 3 à 20 %.

Le (LDPE) est tout particulièrement préféré comme (PE) dans le cas de cette variante.

Selon une variante préférée de l'invention, le copolymère bloc styrénique (EL2) est lui-même compris dans une composition HMPSA qui comprend en outre une ou plusieurs résines tackifiantes et qui est elle-même telle que définie précédemment pour la composition HMPSA (a), et qui peut être identique ou différente à (a).

De préférence, le copolymère bloc styrénique (EL2) est compris dans une composition HMPSA qui est identique à la composition HMPSA (a) constitutive de la couche adhésive A.

Selon une variante également préférée, les compositions (b) et (c) des couches B et C sont identiques.

### Description de la composition constitutive des couches D et E :

La couche adhésive A permet par l'intermédiaire des couches de liaison B et C d'assurer la liaison entre une couche mince complexable D et une couche mince scellable et sécable E.

La couche complexable peut être complexée (ou contre-collée) avec d'autres couches pour la réalisation de l'emballage, par exemple avec une couche rigide pour la réalisation du réceptacle.

La couche scellable et sécable permet d'assurer, au niveau du pourtour le long duquel le réceptacle est lié par soudure à l'opercule, la première ouverture de l'emballage, au moyen d'une zone fragilisée sécable. Après ouverture, la zone fragilisée laisse apparaître :
- la couche adhésive mère sur la bande d'opercule et/ou sur la bande de réceptacle qui étaient en contact dans l'emballage fermé, et/ou
- 2 couches adhésives filles résultant de la rupture de la couche adhésive mère et localisées sur la bande d'opercule et/ou la bande de réceptacle.

Le matériau utilisable pour constituer les 2 couches D et E est généralement un polymère thermoplastique (identique ou différent pour les 2 couches) tel que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

On préfère utiliser pour constituer les 2 couches D et E un matériau polyoléfinique, et tout particulièrement le PE, et encore plus préférentiellement un PE à basse densité (également désigné par l'appellation anglaise de Low Density PolyEthylene ou LDPE).

L'épaisseur de la couche A comprise dans le film multicouche selon l'invention peut varier de 7 à 50 µm, de préférence de 8 à 25 µm, encore plus préférentiellement de 10 à 20 µm.

L'épaisseur des couches de liaison B et C comprises dans ledit film multicouche est quant à elle généralement comprise entre 1 et 10 µm, de préférence entre 2 et 8 µm.

L'épaisseur des 2 couches D et E, ainsi que des autres couches éventuellement mises en œuvre dans le film multicouche selon l'invention est susceptible de varier dans un large domaine allant de 5 à 150 µm.

Selon une variante de réalisation, le film multicouche selon l'invention est un film à 5 couches constitué par la couche adhésive A, les 2 couches intermédiaires B et C et les 2 couches externes D et E, selon l'enchaînement D/B/A/C/E dans lequel le signe «/» signifie que les faces des couches concernées sont en contact.

Selon une autre variante de réalisation, le film multicouche selon l'invention comprend, outre les 5 couches A, B, C, D et E, d'autres couches minces nécessaires à la réalisation de l'emballage, comme par exemple :
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les matériaux utilisables pour constituer lesdites couches peuvent être identiques ou différents et comprennent en général des polymères thermoplastiques qui peuvent être choisis parmi les polymères cités précédemment pour les couches D et E.

Selon variante de réalisation davantage préférée, le film multicouche selon l'invention est un film à 7 couches constitué par :
- la couche adhésive A,
- les 2 couches intermédiaires B et C, dont au moins la couche B est constituée de 50 à 85 % en poids de (PE) greffé par l'anhydride tel que défini précédemment et de 15 à 50 % en poids de copolymère d'éthylène et de propylène (EL1) ;
- une couche BO constituée d'EVOH à effet de barrière contre l'oxygène ;
- une 3^{ème} couche intermédiaire B' dont la composition est telle que définie pour la composition (b), et de préférence identique à celle de la couche B ;
- une couche mince complexable D ; et
- une couche mince scellable et sécable E ;
selon l'enchaînement D/B'/BO/B/A/C/E dans lequel le signe «/» signifie que les faces des couches concernées sont en contact.

En raison du contact entre la couche BO d'une part et les couches B et B' d'autre part, ledit film multicouche présente une cohésion améliorée, tout en étant particulièrement approprié à la fabrication d'un emballage refermable qui permet de conserver plus longtemps des denrées alimentaires susceptibles de réagir par oxydation avec l'oxygène de l'air, telles que les produits à base de viande.

La présente invention concerne encore un procédé de fabrication du film multicouche tel que défini précédemment, caractérisé en ce qu'il comprend la co-extrusion de la composition auto-adhésive thermofusible (a), des compositions (b) et (c), et des matériaux constitutifs des couches D et E.

De préférence, les compositions et matériaux constitutifs des couches A, B, C, D et E sont alimentés dans le dispostif de co-extrusion sous la forme de granulés de taille comprise entre 1 et 10 mm, de préférence entre 2 et 5 mm. Ainsi, la composition auto-adhésive (a) mise en œuvre dans le film multicouche selon l'invention permet, de façon particulièrement avantageuse, d'assurer à la fois les propriétés requises pour ledit film et la possibilité d'une présentation de ladite composition (a) sous la forme des granulés précités. Les autres couches éventuellement comprises dans le film multicouche peuvent être obtenues soit par l'incorporation dans le dispositif de co-extrusion des matériaux constitutifs correspondants sous la forme de granulés de même taille, soit par un procédé de complexage du film directement issu de la co-extrusion, mettant en œuvre par exemple un adhésif à base de polyuréthane.

La composition adhésive (a) peut être préparée, sous cette forme de granulés, par simple mélange de ses ingrédients à chaud, entre 150 et 200°C, de préférence à environ 160°C, au moyen d'une extrudeuse à 2 vis muni d'un outil de découpe du produit extrudé en sortie de la filière

Le procédé de co-extrusion par soufflage de bulle (également connu sous la dénomination de « co-extrusion par soufflage de gaine ») est plus particulièrement préféré. De façon connue de l'homme du métier, ce procédé comprend :
- la fusion, dans des extrudeuses séparées, des compositions et matériaux constitutifs des couches A, B, C, D et E, puis
- le passage des flux correspondants à travers un ensemble de filières annulaires et concentriques, de manière à former une bulle tubulaire à plusieurs couches, dans l'ordre correspondant à celui désiré pour la structure finale, puis
- l'expansion radiale (relativement à la filiaire annulaire) et l'étirement (dans le sens axial) de la bulle, puis
- le refroidissement de la bulle.

Les caractéristiques géométriques des filières, de même que les paramètres du procédé tels que le taux d'expansion radiale et la vitesse d'étirement sont fixés de manière à obtenir l'épaisseur désirée pour les différentes couches constitutives du film multicouche. Il est notamment fait référence pour plus ample description du procédé de co-extrusion par soufflage de bulle à la demande de brevet US2013/0029553.

La présente invention concerne encore l'utilisation du film multicouche tel que décrit précédemment pour la fabrication d'emballages refermables.

L'utilisation pour la fabrication de barquettes refermables est particulièrement avantageuse, et selon un mode de réalisation particulièrement préféré pour la fabrication du film d'operculage de ces barquettes.

Les exemples suivants sont donnés à titre purement illustratif de l'invention, et ne sauraient en aucun cas être interprétés pour en limiter la portée.

### Exemple A (référence) : composition (a) de la couche A

On prépare, sous la forme de granulés d'environ 4 mm de diamètre, une composition constituée, sur la base de % poids/poids, de 59,5 % de Kraton^{®} D1113BT, 25 % d'Escorez ^{®} 1310 LC, 15 % de Dercolyte^{®} S115 et 0,5 % d'Irganox^{®} 1010 par simple mélange des ingrédients à 160°C au moyen d'une extrudeuse à 2 vis.

On mesure un MFI de 57 g/10 minutes.

### Exemple B (référence) : film tricouche D/A/E constitué d'une couche A de la composition de l'exemple A :

Ce film tricouche est fabriqué au moyen d'un dispositif pilote de co-extrusion par soufflage de bulle fonctionnant en continu, dans lequel 3 extrudeuses sont alimentées :
- pour l'une, par la composition a de l'exemple A, et
- pour les 2 autres, par du LDPE ;
les 3 compositions étant sous la forme de granulés de taille d'environ 4 mm.

Les paramètres du procédé sont ajustés de manière à fabriquer un film tricouche constitué :
- en tant que couche A, d'une couche d'épaisseur 15 µm constituée de la composition de l'exemple A,
- en tant que couche mince complexable D, d'une couche d'épaisseur 25 µm constituée de LDPE ;
- en tant que couche mince scellable et sécable E, d'une couche d'épaisseur 10 µm constituée également de LDPE.

Parmi les paramètres usuellement fixés, on peut citer un taux d'expansion radiale de la bulle égal à 3, une vitesse d'étirement de 7 m/minute et un débit global de 11 kg/heure.

Le film tricouche ainsi obtenu a une épaisseur totale de 50 µm, une longueur de 50 m et est conditionné sous la forme d'une bobine de 250 mm de laize.

### Mesure de la force de première ouverture par pelage en T à 23°C :

On découpe dans le film tricouche ainsi obtenu un échantillon sous la forme d'une feuille rectangulaire au format A4 (21 x 29,7 cm).

La face externe de la couche complexable D de cet échantillon est :
- dans un premier temps soumise à un traitement de surface Corona (au moyen d'un plasma), puis
- dans un second temps complexée (autrement dit contrecollée ou laminée) sur un film PET d'épaisseur 23 µm au moyen d'un adhésif solvanté à base de polyuréthane et à l'aide d'un appareil d'enduction du type barre de Mayer.

La feuille rectangulaire est alors placée sous presse pendant 24h.

Puis, ladite feuille rectangulaire est repliée selon une ligne située en son milieu et parallèle au petit côté du rectangle, conduisant à la mise en contact avec elle-même de la couche E scellable et sécable.

On procède alors à un scellage partiel, au moyen de deux mâchoires chauffantes à 130°C, appliquées sous une pression de 6 bar pendant 1 seconde, de manière à obtenir des zones scellées de forme rectangulaire (8 cm de longueur et 1 cm de largeur) disposées perpendiculairement à la ligne de pliure. Chaque zone scellée est découpée pour obtenir une éprouvette de traction dans laquelle la zone scellée de 8 cm de longueur est prolongée (à celle de ses extrémités qui est opposée à la ligne de pliure) par 2 bandes d'environ 2 cm de longueur laissées libres et non scellées.

Ces deux bandes libres sont fixées sur deux dispositifs d'attache (appelés mors) reliés, respectivement, à une partie fixe et une partie mobile d'un appareil de traction qui sont situées sur un axe vertical. Cet appareil de traction est un dynamomètre.

Alors qu'un mécanisme d'entraînement communique à la partie mobile une vitesse uniforme de 300 mm/minute conduisant au pelage des 2 couches scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est indiquée dans le Tableau 1.

### Mesure de la force de deuxième ouverture par pelage en T à 23°C :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

La force obtenue est indiquée dans le Tableau 1.

### Exemple 1 : film à 5 couches D/B/A/C/E avec couche A constituée de la composition de l'exemple A et couches B et C constituées de l' ADMER^{™} AT1955E :

On répète l'exemple B en modifiant le procédé de co-extrusion de manière à ajouter au film tricouche 2 couches B et C ayant la même épaisseur de 5 µm et la même composition, à savoir le produit ADMER^{™} AT1955E comme indiqué dans le Tableau 1.

On obtient un film à 5 couches d'épaisseur totale égale à 60 µm.

Les forces de 1^{ère} et 2^{ème} ouverture sont indiquées dans le Tableau 1.

### Exemple 2 : film à 5 couches D/B/A/C/E avec couche A constituée de la composition de l'exemple A et couches B et C constituées de 95 % de LDPE et 5 % de la composition de l'exemple A :

On répète l'exemple 1 en modifiant le procédé de co-extrusion de manière à ajouter au film tricouche 2 couches B et C ayant la même épaisseur de 5 µm et la même composition. Ladite composition est constituée (en poids) de 95 % de LDPE et de 5 % de la composition de l'exemple A. La composition des 2 couches B et C est obtenue en alimentant les extrudeuses correspondantes par le dosage approprié de granulés de LDPE et de granulés de la composition de l'exemple A.

Les forces de 1^{ère} et 2^{ème} ouverture sont indiquées dans le Tableau 1.

### Exemples 3-5 : film à 5 couches D/B/A/C/E avec couche A constituée de la composition de l'exemple A et couches B et C constituées de LDPE et de la composition de l'exemple A :

On répète l'exemple 2 en utilisant comme matériau constitutif des 2 couches de liaison B et C celui indiqué dans le tableau 1.

Les forces de 1^{ère} et 2^{ème} ouverture sont également indiquées dans le Tableau 1.

Les résultats de force de 1^{ère} ouverture obtenus pour les exemples 1-5 sont du même ordre de grandeur que celui obtenu pour l'exemple B, et correspondent à une qualité d'ouverture d'emballage refermable tout à fait acceptable.

Les résultats obtenus pour la force de 2^{ème} ouverture font apparaître une claire augmentation par rapport à l'exemple B, ce qui indique de façon significative une amélioration de la qualité de la refermeture de l'emballage refermable, faisant suite à sa 1^{ère} ouverture.

**Tableau 1**

| | Exemple B | Exemple 1 | Exemple 2 | Exemple 3 | Exemple 4 | Exemple 5 |
|---|---|---|---|---|---|---|
| Matériau constitutif des 2 couches de liaison B et C | Non concerné | ADMER^{™} AT1955E | 95 % LDPE et 5 % composition exemple A | 90 % LDPE et 10 % composition exemple A | 80 % LDPE et 20 % composition exemple A | 70 % LDPE et 30 % composition exemple A |
| Force de 1^{ère} ouverture (N/cm) | 4,93 | 6,80 | 4,73 | 4,65 | 5,32 | 5,88 |
| Force de 2^{ème} ouverture (N/cm) | 0,96 | 2,98 | 1,26 | 1,33 | 1,32 | 1,27 |

## Revendications

1. Film multicouche comprenant 2 couches minces D et E d'un matériau thermoplastique liées entre elles par une couche continue A qui a une épaisseur allant de 7 à 50 µm, et est constituée par une composition HMPSA (a) comprenant, sur la base du poids total de ladite composition :
- de 40 à 70 % en poids d'une composition (a1) de copolymères blocs styréniques comprenant au moins un bloc élastomère, ladite composition (a1) étant constituée, sur la base de son poids total :
- de 30 à 90 % en poids d'au moins un copolymère dibloc choisi dans le groupe comprenant les SI, SBI, SIB, SB, SEB, et SEP, et
- de 10 à 70 % en poids d'au moins un copolymère tribloc choisi dans le groupe comprenant les SIS, SIBS, SBS, SEBS et SEPS ;
la teneur en motifs styréniques totale de ladite composition (a1) variant de 10 à 40 % en poids sur la base du poids total de a1 ; et
- de 30 à 60 % en poids d'une ou plusieurs résines tackifiantes (a2) ;
ledit film multicouche étant en outre **caractérisé en ce que** la couche adhésive A est :
- reliée à la couche D par l'intermédiaire d'une couche de liaison B, et
- reliée à la couche E par l'intermédiaire d'une couche de liaison C ;
chacune des 2 couches B et C étant constituée respectivement par une composition (b) et (c) comprenant chacune :
- de 50 à 98 % en poids d'une polyoléfine (P) choisie parmi un polyéthylène (PE) et un polypropylène (PP), éventuellement modifiés par l'anhydride maléïque ; et
- de 2 à 50 % en poids d'au moins un composé élastomère (EL) choisi parmi un copolymère d'éthylène et de propylène (EL1) et un copolymère bloc styrénique (EL 2) comprenant au moins un bloc élastomère ;
sur la base du poids total de ladite composition.

2. Film multicouche selon la revendication 1, **caractérisé en ce que** la composition (a1) est constituée d'un copolymère tribloc SIS et d'un copolymère dibloc SI.

3. Film multicouche selon l'une des revendications 1 ou 2, **caractérisé en ce que** la ou les résines tackifiantes (a2) utilisables ont des masses molaires moyennes en poids M_{w} généralement comprises entre 300 et 5000 g/mol (Da), les masses molaires moyennes en poids M_{w} étant déterminées par Chromatographie par Perméation de Gel, la colonne étant calibrée avec des étalons de polystyrène, et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

4. Film multicouche selon l'une des revendications 1 à 3, **caractérisé en ce que** la polyoléfine (P) comprise dans au moins une des compositions (b) et (c) est un (PE), de préférence un (LDPE).

5. Film multicouche selon l'une des revendications 1 à 3, **caractérisé en ce que** la polyoléfine (P) comprise dans au moins une des compositions (b) et (c) est un (PE) greffé par l'anhydride maléïque, de préférence un LLDPE greffé par l'anhydride maléïque.

6. Film multicouche selon l'une des revendications 1 à 5, **caractérisé en ce que** au moins une des compositions b et c constitutives des couches de liaison B et C, comprend :
- de 50 à 85 % en poids de (PE) greffé par l'anhydride maléïque ; et
- de 15 à 50 % en poids de copolymère d'éthylène et de propylène (EL1).

7. Film multicouche selon l'une des revendications 1 à 4, **caractérisé en ce que** le copolymère bloc styrénique (EL2) se présente sous la forme d'une composition de dibloc et de tribloc telle que définie pour la composition (a1).

8. Film multicouche selon l'une des revendications 1 à 4 et selon la revendication 7, **caractérisé en ce que** au moins une des compositions (b) et (c), constitutives des couches de liaison B et C, comprend :
- de 70 à 98 % en poids de (PE) ; et
- de 2 à 30 % en poids de copolymère bloc styrénique (EL2) comprenant au moins un bloc élastomère.

9. Film multicouche selon l'une des revendications 1 à 4 et 7 ou 8, **caractérisé en ce que** le copolymère bloc styrénique (EL2) est compris dans une composition HMPSA qui est telle que définie pour la composition HMPSA (a).

10. Film multicouche selon l'une des revendications 1 à 9, **caractérisé en ce que** les compositions (b) et (c) des couches B et C sont identiques.

11. Film multicouche selon l'une des revendications 1 à 10, **caractérisé en ce qu'**il s'agit d'un film à 5 couches constitué par la couche adhésive A, les 2 couches intermédiaires B et C et les 2 couches externes D et E, selon l'enchaînement D/B/A/C/E dans lequel le signe «/» signifie que les faces des couches concernées sont en contact.

12. Procédé de fabrication du film multicouche tel que défini dans l'une des revendications 1 à 11, **caractérisé en ce qu'**il comprend la co-extrusion de la composition auto-adhésive thermofusible (a), des compositions (b) et (c), et des matériaux constitutifs des couches D et E.

13. Procédé de fabrication du film multicouche selon la revendication 12, **caractérisé en ce que** la co-extrusion est réalisée par soufflage de bulle.

14. Utilisation du film multicouche tel que défini dans l'une des revendications 1 à 11 pour la fabrication d'emballages refermables.

## Patentansprüche

1. Mehrschichtige Folie, die 2 dünne Schichten D und E aus einem thermoplastischen Material, die durch eine durchgehende Schicht A miteinander verbunden sind, die eine Dicke von 7 bis 50 µm aufweist und aus einer HMPSA-Zusammensetzung (a) besteht, die, bezogen auf das Gesamtgewicht der Zusammensetzung, Folgendes umfasst:
- 40 bis 70 Gew.-% einer Zusammensetzung (a1) von Styrol-Blockcopolymeren, die mindestens einen elastomeren Block umfassen, wobei die Zusammensetzung (a1) aus Folgendem besteht, bezogen auf ihr Gesamtgewicht:
- 30 bis 90 Gew.-% mindestens eines Diblockcopolymers, das aus der SI, SBI, SIB, SB, SEB und SEP umfassenden Gruppe ausgewählt ist, und
- 10 bis 70 Gew.-% mindestens eines Triblockcopolymers, das aus der SIS, SIBS, SBS, SEBS und SEPS umfassenden Gruppe ausgewählt ist;
wobei der Gesamtgehalt an Styroleinheiten der Zusammensetzung (a1) von 10 bis 40 Gew.-% variiert, bezogen auf das Gesamtgewicht von a1; und
- 30 bis 60 Gew.-% eines oder mehrerer klebrigmachender Harze (a2);
wobei die mehrschichtige Folie außerdem **dadurch gekennzeichnet ist, dass** die Klebstoffschicht A:
- mittels einer Verbindungsschicht B mit der Schicht D verbunden ist und
- mittels einer Verbindungsschicht C mit der Schicht E verbunden ist;
wobei jede der 2 Schichten B bzw. C jeweils aus einer Zusammensetzung (b) und (c) besteht, die jeweils Folgendes umfasst:
- 50 bis 98 Gew.-% eines aus einem Polyethylen (PE) und einem Polypropylen (PP) ausgewählten Polyolefins (P), das gegebenenfalls durch Maleinsäureanhydrid modifiziert ist; und
- 2 bis 50 Gew.-% mindestens einer elastomeren Verbindung (EL), die aus einem Copolymer (EL1) von Ethylen und Propylen und einem Styrol-Blockcopolymer (EL2) ausgewählt ist, das mindestens einen elastomeren Block umfasst;
bezogen auf das Gesamtgewicht der Zusammensetzung.

2. Mehrschichtige Folie nach Anspruch 1, **dadurch gekennzeichnet, dass** die Zusammensetzung (a1) aus einem SIS-Triblockcopolymer und einem SI-Diblockcopolymer besteht.

3. Mehrschichtige Folie nach einem der Ansprüche 1 oder 2, **dadurch gekennzeichnet, dass** das oder die verwendbaren klebrigmachenden Harze (a2) Gewichtsmittel M_{w} des Molekulargewichts aufweisen, die im Allgemeinen zwischen 300 und 5000 g/mol (Da) betragen, wobei die Gewichtsmittel M_{w} des Molekulargewichts mittels Gelpermeationschromatographie bestimmt werden, wobei die Säule mit Polystyrol-Eichsubstanzen kalibriert wird, und die insbesondere ausgewählt sind aus:
- (i) Kolophonium natürlichen Ursprungs oder modifiziertem Kolophonium, wie beispielsweise aus Kiefernölharz extrahiertes Kolophonium, aus Baumwurzeln extrahiertes Wurzelharz, und deren hydrierten, dehydrierten, dimerisierten, polymerisierten oder mit Monoalkoholen oder Polyolen, wie Glycerin, veresterten Derivaten;
- (ii) Harzen, die durch eine Hydrierung, Polymerisation oder Copolymerisation (mit einem aromatischen Kohlenwasserstoff) von Mischungen von aus Erdölfraktionen stammenden ungesättigten aliphatischen Kohlenwasserstoffen mit etwa 5, 9 oder 10 Kohlenstoffatomen erhalten werden;
- (iii) Terpenharzen, die im Allgemeinen aus der Polymerisation von Terpenkohlenwasserstoffen, wie beispielsweise Monoterpen (oder Pinen), in Gegenwart von Friedel-Crafts-Katalysatoren resultieren, die gegebenenfalls durch Einwirkung von Phenolen modifiziert sind;
- (iv) Copolymeren auf der Basis von natürlichen Terpenen, beispielsweise Styrol/Terpen, alpha-Methylstyrol/Terpen und Vinyltoluol/Terpen.

4. Mehrschichtige Folie nach einem der Ansprüche 1 bis 3, **dadurch gekennzeichnet, dass** das Polyolefin (P), das in der Zusammensetzung (b) und/oder (c) enthalten ist, ein (PE), vorzugsweise ein (LDPE), ist.

5. Mehrschichtige Folie nach einem der Ansprüche 1 bis 3, **dadurch gekennzeichnet, dass** das Polyolefin (P), das in der Zusammensetzung (b) und/oder (c) enthalten ist, ein (PE) mit aufgepfropftem Maleinsäureanhydrid, vorzugsweise ein LLDPE mit aufgepfropftem Maleinsäureanhydrid, ist.

6. Mehrschichtige Folie nach einem der Ansprüche 1 bis 5, **dadurch gekennzeichnet, dass** die Zusammensetzungen b und/oder a, aus denen die Verbindungsschichten B und C bestehen, Folgendes umfassen:
- 50 bis 85 Gew.-% (PE) mit aufgepfropftem Maleinsäureanhydrid und
- 15 bis 50 Gew.-% eines Copolymers von Ethylen und Propylen (EL1).

7. Mehrschichtige Folie nach einem der Ansprüche 1 bis 4, **dadurch gekennzeichnet, dass** das Styrol-Blockcopolymer (EL2) in Form einer Diblock- und Triblock-Zusammensetzung gemäß der Definition für Zusammensetzung (a1) vorliegt.

8. Mehrschichtige Folie nach einem der Ansprüche 1 bis 4 und nach Anspruch 7, **dadurch gekennzeichnet, dass** die Zusammensetzungen (b) und/oder (c), aus denen die Verbindungsschichten B und C bestehen, Folgendes umfassen:
- 70 bis 98 Gew.-% (PE) und
- 2 bis 30 Gew.-% eines Styrol-Blockcopolymers (EL2), das mindestens einen elastomeren Block umfasst.

9. Mehrschichtige Folie nach einem der Ansprüche 1 bis 4 und 7 oder 8, **dadurch gekennzeichnet, dass** das Styrol-Blockcopolymer (EL2) in einer HMPSA-Zusammensetzung gemäß der Definition für die HMPSA-Zusammensetzung (a) enthalten ist.

10. Mehrschichtige Folie nach einem der Ansprüche 1 bis 9, **dadurch gekennzeichnet, dass** die Zusammensetzungen (b) und (c) der Schichten B und C identisch sind.

11. Mehrschichtige Folie nach einem der Ansprüche 1 bis 10, **dadurch gekennzeichnet, dass** es sich um eine Folie mit 5 Schichten handelt, die aus der Klebstoffschicht A, den 2 Zwischenschichten B und C und den 2 äußeren Schichten D und E mit der Abfolge D/B/A/C/E bestehen, wobei das Zeichen "/" bedeutet, dass sich die Flächen der betreffenden Schichten in Kontakt befinden.

12. Verfahren zur Herstellung einer mehrschichtigen Folie gemäß der Definition in einem der Ansprüche 1 bis 11, **dadurch gekennzeichnet, dass** es die Coextrusion der heißschmelzbaren selbstklebenden Zusammensetzung (a), der Zusammensetzungen (b) und (c) und der Materialien umfasst, aus denen die Schichten D und E bestehen.

13. Verfahren zur Herstellung einer mehrschichtigen Folie nach Anspruch 12, **dadurch gekennzeichnet, dass** die Coextrusion mittels Schlauchblasen erfolgt.

14. Verwendung der mehrschichtigen Folie gemäß der Definition in einem der Ansprüche 1 bis 11 zur Herstellung von wiederverschließbaren Verpackungen.

## Claims

1. Multilayer film comprising 2 thin layers D and E of a thermoplastic material bonded together by a continuous layer A which has a thickness ranging from 7 to 50 µm and consists of an HMPSA composition (a) comprising, on the basis of the total weight of said composition:
- from 40% to 70% by weight of a composition (a1) of styrene block copolymers comprising at least one elastomer block, said composition (a1) consisting, on the basis of its total weight:
- of 30% to 90% by weight of at least one diblock copolymer chosen from the group comprising SI, SBI, SIB, SB, SEB and SEP, and
- of 10% to 70% by weight of at least one triblock copolymer chosen from the group comprising SIS, SIBS, SBS, SEBS and SEPS;
the total content of styrene units of said composition (a1) ranging from 10% to 40% by weight on the basis of the total weight of a1; and
- from 30% to 60% by weight of one or more tackifying resins (a2);
said multilayer film being further **characterized in that** the adhesive layer A is:
- connected to the layer D by means of a tie layer B, and
- connected to the layer E by means of a tie layer C;
each of the 2 layers B and C respectively consisting of a composition (b) and (c) each comprising:
- from 50% to 98% by weight of a polyolefin (P) chosen from a polyethylene (PE) and a polypropylene (PP), optionally modified with maleic anhydride; and
- from 2% to 50% by weight of at least one elastomer compound (EL) chosen from a copolymer of ethylene and propylene (EL1) and a styrene block copolymer (EL2) comprising at least one elastomer block;
on the basis of the total weight of said composition.

2. Multilayer film according to Claim 1, **characterized in that** the composition (a1) consists of a triblock copolymer SIS and a diblock copolymer SI.

3. Multilayer film according to either of Claims 1 and 2, **characterized in that** the tackifying resin or resins (a2) that can be used have weight-average molar masses Mw of generally between 300 and 5000 g/mol (Da),
the weight-average molar masses Mw
being determined by gel permeation chromatography, the column being calibrated with polystyrene standards, and are chosen in particular from:
- (i) rosins of natural origin or modified rosins, such as, for example, rosin extracted from pine gum, wood rosin extracted from tree roots and derivatives thereof which are hydrogenated, dehydrogenated, dimerized, polymerized or esterified with monoalcohols or polyols, such as glycerol;
- (ii) resins obtained by hydrogenation, polymerization or copolymerization (with an aromatic hydrocarbon) of mixtures of unsaturated aliphatic hydrocarbons having approximately 5, 9 or 10 carbon atoms resulting from petroleum fractions;
- (iii) terpene resins generally resulting from the polymerization of terpene hydrocarbons, such as, for example, monoterpene (or pinene), in the presence of Friedel-Crafts catalysts, which are optionally modified by the action of phenols;
- (iv) copolymers based on natural terpenes, for example styrene/terpene, α-methylstyrene/terpene and vinyltoluene/terpene.

4. Multilayer film according to one of Claims 1 to 3, **characterized in that** the polyolefin (P) included in at least one of the compositions (b) and (c) and is a (PE), preferably an (LDPE).

5. Multilayer film according to one of Claims 1 to 3, **characterized in that** the polyolefin (P) included in at least one of the compositions (b) and (c) is a (PE) grafted with maleic anhydride, preferably an LLDPE grafted with maleic anhydride.

6. Multilayer film according to one of Claims 1 to 5, **characterized in that** at least one of the constituent compositions b and c of the tie layers B and C comprises:
- from 50% to 85% by weight of (PE) grafted with maleic anhydride; and
- from 15% to 50% by weight of copolymer of ethylene and of propylene (EL1).

7. Multilayer film according to one of Claims 1 to 4, **characterized in that** the styrene block copolymer (EL2) is in the form of a diblock and triblock composition as defined for the composition (a1).

8. Multilayer film according to one of Claims 1 to 4 and according to Claim 7, **characterized in that** at least one of the constituent compositions (b) and (c) of the tie layers B and C comprises:
- from 70% to 98% by weight of (PE); and
- from 2% to 30% by weight of styrene block copolymer (EL2) comprising at least one elastomer block.

9. Multilayer film according to one of Claims 1 to 4 and 7 or 8, **characterized in that** the styrene block copolymer (EL2) is included in an HMPSA composition which is as defined for the HMPSA composition (a).

10. Multilayer film according to one of Claims 1 to 9, **characterized in that** the compositions (b) and (c) of the layers B and C are identical.

11. Multilayer film according to one of Claims 1 to 10, **characterized in that** it is a film comprising 5 layers consisting of the adhesive layer A, the 2 intermediate layers B and C and the 2 external layers D and E, according to the sequence D/B/A/C/E in which the "/" sign signifies that the faces of the layers in question are in contact.

12. Process for producing the multilayer film as defined in one of Claims 1 to 11, **characterized in that** it comprises the coextrusion of the hot-melt pressure-sensitive adhesive composition (a), of the compositions (b) and (c), and of the constituent materials of the layers D and E.

13. Process for producing the multilayer film according to Claim 12, **characterized in that** the coextrusion is carried out by bubble blowing.

14. Use of the multilayer film as defined in one of Claims 1 to 11 for producing resealable packagings.
